# EUROPÄISCHE PATENTSCHRIFT

(11) **EP 3 216 666 B1**
(45) Veröffentlichungstag und Bekanntmachung des Hinweises auf die Patenterteilung: **11.11.2020**
(21) Anmeldenummer: 17162483.6
(22) Anmeldetag: 07.09.2012
(51) Int. Cl.: B60T 17/22, B60T 8/17

(54) **BREMSANLAGE EINES SCHIENENFAHRZEUGS**
BRAKING SYSTEM FOR A RAIL VEHICLE
INSTALLATION DE FREINAGE D'UN VÉHICULE SUR RAILS

(30) Priorität: 09.09.2011 DE 102011113093
(43) Veröffentlichungstag der Anmeldung: 13.09.2017
(62) Teilanmeldung aus: 12758831.7
(73) Patentinhaber: KNORR-BREMSE Systeme für Schienenfahrzeuge GmbH, 80809 München (DE)
(72) Erfinder: Schneider, Stefan, 80995 München (DE); Schubert, Michael, 80335 München (DE); Brackovic, Jasmina, 80809 München (DE)

(56) Entgegenhaltungen:
- EP-A1- 0 391 047
- EP-A1- 0 601 681
- WO-A2-2010/069520
- DE-A1-102008 015 873

## Beschreibung

Die vorliegende Erfindung betrifft eine Bremsanlage eines Schienenfahrzeugs gemäß dem Oberbegriff von Anspruch 1 sowie ein Schienenfahrzeug mit einer solchen Bremsanlage gemäß Anspruch 11.

Bei modernen Schienenfahrzeugen kann eine Vielzahl von Bremskraftsensoren vorgesehen sein, um während einer Bremsung ausgeübte Bremskräfte oder Bremsmomente zu erfassen. Die Kenntnis derartiger Bremskräfte oder Bremsmomente ist für eine Steuerung oder Regelung einer Bremsung nützlich, da insbesondere Blockierzustände von Rädern vermieden werden können und ein möglichst großer Kraftschluss zwischen Rad und Schiene für die Bremsung wirksam genutzt werden kann.

Eine solche Bremsanlage bzw. ein solches Schienenfahrzeug sind aus EP 0 391 047 A1 bekannt.

Die Aufgabe der vorliegenden Erfindung besteht demgegenüber darin, eine Bremsanlage eines Schienenfahrzeugs derart weiterzubilden, dass sie eine möglichst hohe Betriebssicherheit aufweist. Weiterhin soll auch ein Schienenfahrzeug mit einer solchen Bremsanlage zur Verfügung gestellt werden.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

### Offenbarung der Erfindung

Im Rahmen der Erfindung kann ein Schienenfahrzeug einen oder mehrere Wagen mit oder ohne eigenen Antrieb und/oder ein Zugfahrzeug in beliebiger Kombination bezeichnen. Insbesondere kann ein Schienenfahrzeug Triebwagen aufweisen. Ein Schienenfahrzeug oder ein Wagen des Schienenfahrzeugs kann Drehgestelle aufweisen, an denen Radachsen des Fahrzeugs angeordnet sind. Die Drehgestelle können an einem Wagenaufbau befestigt sein. Eine Bremsanlage kann eine pneumatische, insbesondere eine elektropneumatische Bremsanlage sein. Eine Bremsanlage kann eine oder mehrere Bremsvorrichtungen aufweisen, die insbesondere eine oder mehrere kraftschlüssige Reibungsbremsvorrichtungen umfassen können. Eine kraftschlussabhängige Reibungsbremsvorrichtung kann dazu ausgebildet sein, ein Rad oder eine Radachse eines Schienenfahrzeugs durch Reibung abzubremsen. Dabei überträgt eine kraftschlussabhängige Reibungsbremsvorrichtung eine Kraft zur Bremsung über einen Rad-Schiene-Kontakt. Im Gegensatz dazu werden Bremseinrichtungen, die eine Bremskraft nicht über einen Rad-Schiene-Kontakt übertragen, etwa Magnetschienenbremsen, nicht als kraftschlussabhängige Bremseinrichtungen im Sinne dieser Beschreibung angesehen. Eine kraftschlussabhängige Reibungsbremsvorrichtung kann insbesondere eine Scheibenbremseinrichtung, eine Klotzbremseinrichtung oder eine kombinierte Scheiben/Klotzbremseinrichtung sein. Eine Bremsvorrichtung, insbesondere eine kraftschlussabhängige Reibungsbremsvorrichtung ist eine druckbetätigte Bremsvorrichtung, nämlich eine pneumatische Bremsvorrichtung. Eine druckbetätigte Bremsvorrichtung kann elektrisch ansteuerbare Ventile wie Magnetventile und/oder elektrisch ansteuerbare Vorsteuerventile aufweisen. Entsprechend kann eine derartige druckbetätigte Bremsvorrichtung als elektropneumatische Bremsvorrichtung bezeichnet werden. Eine Bremsvorrichtung, insbesondere eine kraftschlussabhängige Reibungsbremsvorrichtung kann eine oder mehrere Reibbremseinrichtungen aufweisen. Einer Reibbremseinrichtung kann mindestens ein Krafterzeuger zugeordnet sein, welcher es vermag, einen ihm zugeführten pneumatischen Bremsdruck in eine Bremskraft zur Betätigung von Reibelementen der Reibbremseinrichtung umzusetzen. Eine Bremsvorrichtung mit einem Krafterzeuger, der einen Bremsdruck in eine Bremskraft umzusetzen vermag, kann als druckbetätigte Bremsvorrichtung angesehen werden, beispielsweise als pneumatische Bremsvorrichtung. Eine Reibbremseinrichtung kann dazu ausgebildet sein, bei Anlegen eines pneumatischen Bremsdrucks oder eines Bremsstroms auf einen oder mehrere Krafterzeuger ein auf ein Rad und/oder eine Achse des Fahrzeugs wirkendes Bremsmoment zu erzeugen. Eine Bremsvorrichtung oder eine Reibbremseinrichtung kann einen Krafterzeuger wie einen pneumatischen Zylinder aufweisen, der bei Beaufschlagung mit einem Druck die Reibbremseinrichtung für eine Bremsung betätigt. Eine Reibbremseinrichtung kann insbesondere mehrere Reibelemente aufweisen, die dazu vorgesehen sind, aneinander zu reiben, wenn sie von einem Krafterzeuger mit einer Bremskraft beaufschlagt werden. Das Beaufschlagen mindestens eines Reibelements einer Bremsvorrichtung oder einer Reibbremseinrichtung einer Bremsvorrichtung mit einer Bremskraft kann als das Betätigen der Bremsvorrichtung oder der Reibbremseinrichtung angesehen werden. Insbesondere kann mindestens ein Reibpaar mit zwei Reibelementen vorgesehen sein. Beispielsweise kann eine Reibbremseinrichtung eine Bremsscheibe aufweisen, die dazu ausgebildet ist, bei betätigter Bremse in reibenden Kontakt mit einer oder mehreren mit einem Bremsbelag versehenen Bremsbacken gebracht zu werden. Eine Reibbremseinrichtung kann alternativ einen oder mehrere Bremsklötze mit zugeordnetem Bremsbelag aufweisen, die bei betätigter Bremse in reibenden Kontakt mit einer Radfläche eines Rades gebracht werden. Der auf den Krafterzeuger oder einen druckbetätigten Zylinder zum Betätigen der Reibbremseinrichtung ausgeübte Druck kann als Bremsdruck bezeichnet werden. Die Reibbremseinrichtung kann dazu ausgebildet sein, ein einzeln aufgehängtes Rad und/oder eine Radachse zu bremsen, die mindestens zwei starr miteinander verbundene Räder aufweist. Somit kann eine Reibbremseinrichtung mindestens einem Rad zugeordnet sein. Eine Reibbremseinrichtung kann dabei auf demjenigen Drehgestell angeordnet oder aufgehängt sein, an dem die ihm zugeordnete Achse und/oder das ihm zugeordnete Rad angeordnet sind. Die beim Betätigen einer Reibbremseinrichtung durch den Krafterzeuger ausgeübte Kraft kann als Bremskraft bezeichnet werden. Die Bremskraft hängt von dem ausgeübten Bremsdruck oder angelegten Bremsstrom sowie von Konstruktion, Zustand und Funktionsweise der Reibbremseinrichtung ab. Als Bremsmoment kann das Moment bezeichnet werden, das beim Bremsen auf ein Rad ausgeübt wird. Das Bremsmoment hängt insbesondere von der Bremskraft und von der Radgeometrie ab, insbesondere von einem Raddurchmesser. Bremskraft kann auch bei einem nicht bewegten Rad wirken, um beispielsweise einen Bremsbelag in einen Kontakt mit einer Radlauffläche oder einer Bremsscheibe zu bringen. Bei bewegtem Rad erzeugt eine Bremskraft ein zugeordnetes Bremsmoment. Eine Bremssteuereinrichtung kann eine elektronische Steuereinrichtung für eine Bremsanlage eines Schienenfahrzeugs sein. Die Bremssteuereinrichtung kann beispielsweise ein Gleitschutzrechner, ein Bremsrechner oder eine andere Steuereinrichtung der Bremsanlage eines Schienenfahrzeugs ausgebildete Steuereinrichtung sein. Es kann eine Bremsdrucksensoreinrichtung vorgesehen sein, welche es vermag, einen Bremsdruck zu erfassen. Es ist vorstellbar, dass eine Bremsstromsensoreinrichtung vorgesehen ist, welche es vermag, einen Bremsstrom zu erfassen. Eine Steuereinrichtung kann dazu ausgebildet sein, einen erfassten Bremsdruck von der Bremsdrucksensoreinrichtung zu empfangen. Eine Bremswirkungssensoreinrichtung kann dazu ausgebildet sein, eine tatsächliche Bremswirkung zu erfassen, die auf ein Rad und/oder eine Achse ausgeübt wird. Es ist insbesondere vorstellbar, dass eine Bremswirkungssensoreinrichtung als eine Bremskraftsensoreinrichtung ausgebildet ist, welche eine auf mindestens eine ihr zugeordnete Reibbremseinrichtung ausgeübte Bremskraft und/oder ein zugeordnetes Bremsmoment zu erfassen vermag. Somit kann eine Bremswirkungssensoreinrichtung beispielsweise zur Erfassung einer durch mindestens eine Reibbremseinrichtung ausgeübten Bremskraft und/oder eines durch die mindestens eine Reibbremseinrichtung ausgeübten Bremsmomentes ausgebildet sein. Dazu kann eine Bremswirkungssensoreinrichtung beispielsweise einen oder mehrere Sensoren umfassen, die etwa an einem Aufhängungspunkt einer Reibbremseinrichtung an einem Drehgestell angeordnet sein können. Eine Bremswirkungssensoreinrichtung kann insbesondere einen oder mehrere Dehnungsmessstreifen aufweisen. Elemente, beispielsweise Sensoren, der Bremswirkungssensoreinrichtung können an beweglichen und/oder starren Elementen der Reibbremseinrichtung und/oder deren Aufhängung angeordnet sein, um bei einer Betätigung der Reibbremseinrichtung eine Rückwirkung zu messen, die durch einen Reibpartner wie einem Rad oder einer Bremsscheibe erzeugt wird. Durch eine derartige Rückwirkung kann auf die Bremskraft und/oder das Bremsmoment geschlossen werden. Eine derartige Rückwirkung kann sich in Form einer Verformung bemerkbar machen, die beispielsweise durch Dehnungsmessstreifen erfassbar ist. Die Bremswirkungssensoreinrichtung kann zur Erfassung der Bremskraft und/oder des Bremsmomentes für mehr als eine Reibbremseinrichtung vorgesehen sein. Allgemein kann eine Sensoreinrichtung Signale bereitstellen, die Messergebnisse repräsentieren. Derartige Signale können durch entsprechende Daten dargestellt sein, die von einer Steuereinrichtung empfangen werden können. Das Ermitteln von Daten kann das Empfangen und/oder Bearbeiten von Daten umfassen, die von einer Sensoreinrichtung und/oder einer Steuereinrichtung übermittelt werden. Das Bearbeiten von Daten kann das Durchführen von Berechnungen umfassen.

Die Steuereinrichtung ist eine Bremssteuereinrichtung, welche es vermag, Komponenten der Bremsanlage anzusteuern. Die Bremsanlage umfasst neben einer kraftschlussabhängigen Reibungsbremsvorrichtung noch weitere Bremsvorrichtungen, nämlich eine Magnetschienenbremsvorrichtung, eine lineare Wirbelbremsvorrichtung und/oder eine Retardervorrichtung. Die Reibungsbremsvorrichtung ist eine druckbetätigte Bremsvorrichtung, nämlich eine pneumatische Bremsvorrichtung. Die Steuereinrichtung ist als elektronische Steuereinrichtung ausgebildet, die zum Empfangen von Bremsdruckdaten, welche einen Bremsdruck angeben oder betreffen, und weiteren Daten ausgebildet sein kann. Der Bremsdruck kann ein durch eine Bremsdrucksensoreinrichtung erfasster und direkt oder indirekt an die Steuereinrichtung übermittelter Bremsdruck sein. Es ist auch vorstellbar, dass der Bremsdruck basierend auf Daten von einer Bremsdrucksensoreinrichtung bestimmt oder berechnet wird, beispielsweise durch die Steuereinrichtung. Die Steuereinrichtung kann dazu ausgebildet sein, die Bremsanlage und/oder die kraftschlussabhängige Reibungsbremsvorrichtung basierend auf der bestimmten Bremswirkung anzusteuern. Es ist vorstellbar, dass die Steuereinrichtung dazu ausgebildet ist, den zeitlichen Verlauf eines Bremsdrucks zu überwachen und/oder zu speichern. Das Bestimmen der Bremswirkung kann während der Bremsung erfolgen. Die Bremswirkung kann mindestens eine auf einen Teil des Fahrzeugs ausgeübte Bremskraft und/oder ein auf einen Teil des Fahrzeugs ausgeübtes Bremsmoment betreffen. Insbesondere kann die Bremswirkung eine auf eine Reibbremseinrichtung der kraftschlussabhängigen Reibungsbremsvorrichtung ausgeübte Bremskraft und/oder ein auf ein der Reibbremseinrichtung zugeordnetes Rad ausgeübtes Bremsmoment sein. Der Bremsdruck kann ein Bremsdruck sein, der zum Betätigen mindestens einer Reibbremseinrichtung einer druckbetätigten Bremsvorrichtung ausgeübt und durch eine geeignete Sensoreinrichtung erfasst wird.

Es kann vorgesehen sein, dass die Steuereinrichtung dazu ausgebildet ist, einen Bremsdruck für mehr als eine Reibbremseinrichtung der Bremsvorrichtung zu erfassen und/oder zu ermitteln. Insbesondere können unterschiedliche Bremsdrücke ermittelt werden. Dabei können an verschiedenen Stellen des Fahrzeugs Bremsdruckwerte ermittelt und der Steuereinrichtung bereitgestellt werden. Die Steuereinrichtung kann dazu ausgebildet sein, die Bremswirkung basierend auf Bremsdrücken zu bestimmen, die mehreren Stellen des Schienenfahrzeugs und/oder Reibbremseinrichtungen zugeordnet sind. Die Steuereinrichtung kann dazu ausgebildet sein, einen zeitlichen Verlauf des Bremsdrucks zu überwachen.

Die Erfindung geht von einer Bremsanlage eines Schienenfahrzeugs aus, welche eine kraftschlussabhängige pneumatische Reibungsbremsvorrichtung umfasst, welche eine Kraft zur Bremsung über einen Rad-Schiene-Kontakt überträgt, wobei die pneumatische Reibungsbremsvorrichtung wenigstens Folgendes umfasst: Wenigstens eine Reibbremseinrichtung mit wenigstens einem Krafterzeuger, welcher ausgebildet ist, einen ihm zugeführten pneumatischen Bremsdruck in eine Bremskraft und/oder in ein Bremsmoment zur Betätigung von Reibelementen der Reibbremseinrichtung umzusetzen, eine Bremsdrucksensoreinrichtung, welche ausgebildet ist, dass sie den pneumatischen Bremsdruck durch wenigstens einen Bremsdrucksensor erfasst, eine Bremswirkungssensoreinrichtung, welche ausgebildet ist, dass sie die durch die Reibungsbremseinrichtung ausgeübte Bremskraft und/oder das durch die Reibungsbremseinrichtung ausgeübte Bremsmoment durch wenigstens einen Bremswirkungssensor erfasst, eine elektronische Steuereinrichtung, welche ausgebildet ist, um von dem wenigstens einen Bremswirkungssensor Bremswirkungsdaten und von dem wenigstens einen Bremsdrucksensor Bremsdruckdaten zu empfangen und um die Bremsdruckdaten entsprechenden Bremswirkungsdaten zuzuordnen und die einander zugeordneten Bremsdruckdaten und Bremswirkungsdaten zu überwachen.

Im Rahmen dieser Überwachung kann insbesondere eine Plausibilisierung der Bremsdruckdaten auf der Basis der Bremswirkungsdaten und umgekehrt durchgeführt werden. Weiterhin können im Rahmen dieser Überwachung kritische Betriebszustände der Bremsanlage erfasst werden, beispielsweise wenn etwa anhand der Bremsdruckdaten ein Bremsdruck zwar von Null detektiert wird, aber anhand der Bremswirkungsdaten eine positive Bremswirkung vorliegt.

Erfindungsgemäß wird die elektronische Steuereinrichtung durch eine elektronische Bremssteuereinrichtung gebildet, welche eine Steuerventileinrichtung ansteuert, welche mit einer Druckluftvorratseinrichtung verbunden ist, aus der sie Druckluft entnimmt, um sie bei einer Bremsung dem wenigstens einen Krafterzeuger bereitzustellen, wobei die Steuerventileinrichtung wenigstens ein durch die elektronische Bremssteuereinrichtung ansteuerbares Magnetventil aufweist, wobei die elektronische Bremssteuereinrichtung es vermag, Komponenten der Bremsanlage anzusteuern, wobei die Bremsanlage neben der kraftschlussabhängigen pneumatischen Reibungsbremsvorrichtung eine Magnetschienenbremsvorrichtung, eine lineare Wirbelbremsvorrichtung und/oder eine Retardervorrichtung umfasst.

Besonders bevorzugt umfasst die Bremswirkungssensoreinrichtung wenigstens einen Bremswirkungssensor, welcher an einem Aufhängungspunkt einer Reibungsbremseinrichtung an einem Drehgestell des Schienenfahrzeugs angeordnet ist.

Gemäß einer Weiterbildung weist die Bremswirkungssensoreinrichtung als Bremswirkungssensor wenigstens einen Dehnungsmessstreifen auf.

Besonders bevorzugt ist der wenigstens einen Bremswirkungssensor der Bremswirkungssensoreinrichtung an beweglichen und/oder starren Elementen der Reibungsbremseinrichtung und/oder an der Aufhängung der Reibungsbremseinrichtung angeordnet ist, um bei einer Betätigung der Reibbremseinrichtung eine Rückwirkung zu messen, die durch die Reibelemente der Reibungsbremseinrichtung erzeugt wird.

Gemäß einer Weiterbildung ist die elektronische Steuereinrichtung ausgebildet, dass sie durch die Rückwirkung auf die Bremskraft und/oder das Bremsmoment schließt.

Die wenigstens eine Reibremseinrichtung kann eine Bremsscheibe aufweisen, welche ausgebildet ist, bei betätigter Bremse in reibenden Kontakt mit einer oder mehreren mit einem Bremsbelag versehenen Bremsbacken gebracht zu werden, oder einen oder mehrere Bremsklötze mit zugeordnetem Bremsbelag, die bei betätigter Bremse in reibenden Kontakt mit einer Reibfläche eines Rades gebracht werden.

Die wenigstens eine Reibremseinrichtung kann ausgebildet sein, dass sie ein einzeln aufgehängtes Rad und oder eine Radachse bremst, welche mindestens zwei starr miteinander verbundene Räder aufweist.

Der wenigstens eine Krafterzeuger kann einen pneumatischen Zylinder aufweisen, wobei dann der auf den pneumatischen Zylinder ausgeübte Druck den Bremsdruck darstellt.

Insbesondere kann jedem Rad, jedem Drehgestell oder jedem Wagen des Schienenfahrzeugs lediglich ein Bremswirkungssensor zugeordnet sein.

Die Erfindung betrifft auch ein Schienenfahrzeug mit einer hierin beschriebenen Bremsanlage.

Die Erfindung wird nun mit Bezug auf die begleitenden Zeichnungen anhand einer bevorzugten Ausführungsform beispielhaft erläutert.

### Es zeigen:

- Fig. 1: eine schematische Darstellung eines Schienenfahrzeugs;
- Fig. 2: eine schematische Darstellung einer Bremsanlage eines Schienenfahrzeugs.

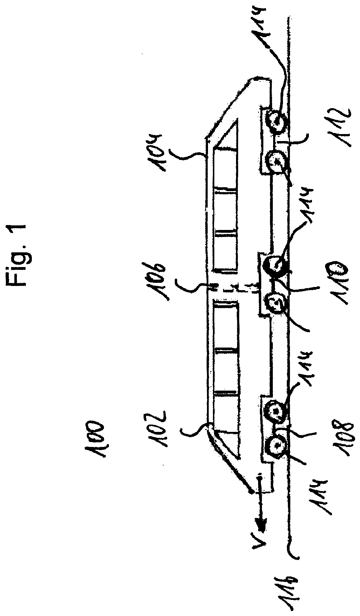

**Fig.1** zeigt schematisch ein Schienenfahrzeug 100. Das Schienenfahrzeug 100 weist zwei Glieder 102 und 104 auf, die miteinander beweglich verbunden sind. Zum Verbinden der Fahrzeugglieder 102, 104 ist eine Kopplungsvorrichtung 106 vorgesehen. In diesem Beispiel weist das Schienenfahrzeug 100 drei Drehgestelle 108, 110, 112 auf, an denen jeweils zwei Radachsen vorgesehen sind. An den Drehgestellen 108, 110, 112 sind jeweils Räder 114 vorgesehen, die auf einer Schiene 116 laufen. Die Fahrtrichtung des Fahrzeugs ist durch den Pfeil am Fahrzeugglied 102 mit der Fahrzeuggeschwindigkeit v dargestellt. Somit stellt das Fahrzeugglied 102 das vordere Fahrzeugglied dar, während das Fahrzeugglied 104 das hintere Fahrzeugglied repräsentiert. Am Schienenfahrzeug 100 kann eine Vielzahl von nicht näher dargestellten Sensoren vorgesehen sein. So können im Bereich der Kopplungsvorrichtung 106 Längskraftsensoren vorgesehen sein, die es vermögen, Kräfte zwischen den Fahrzeuggliedern 102, 104 in Längsrichtung zu bestimmen. Das Schienenfahrzeug 100 kann einen oder mehrere Sensoren zur Bestimmung der Fahrzeuggeschwindigkeit und/oder einer Beschleunigung oder Verzögerung aufweisen. Dazu können beispielsweise Sensoren zur Bestimmung von Längs-, Gier und/oder Querbeschleunigungen eingesetzt werden. Ferner können den Drehgestellen oder an den Drehgestellen angeordneten Reibbremseinrichtungen einer kraftschlussabhängigen Reibungsbremsvorrichtung zugeordnete Bremsdrucksensoren oder Bremsstromsensoren und/oder Bremswirkungssensoren wie Bremskraft- oder Bremsmomentsensoren vorgesehen sein. Allgemein kann ein Bremsdrucksensor oder Bremsstromsensor als einer Reibbremseinrichtung zugeordnet angesehen werden, wenn er es vermag, einen individuell die Reibbremseinrichtung betätigenden Bremsdruck oder Bremsstrom zu erfassen. Ein Bremskraftsensor oder Bremsmomentensensor kann als einer Reibbremseinrichtung oder einer durch die Reibbremseinrichtung zu bremsenden Radachse zugeordnet angesehen werden, wenn er es vermag, eine durch die Reibbremseinrichtung ausgeübte Bremskraft oder ein entsprechendes Bremsmoment zu erfassen. Darüber hinaus können Raddrehzahlsensoren vorgesehen sein, um die Raddrehzahl mindestens einer Radachse zu bestimmen. Sensoren können allgemein mit einer Steuereinrichtung verbunden sein, die es vermag, von den Sensoren entsprechende Daten zu empfangen. Aus Sensordaten können beispielsweise durch die Steuereinrichtung eine Geschwindigkeitsänderung und/oder eine Änderung einer Raddrehzahl bestimmt und gegebenenfalls entsprechenden Rädern, Drehgestellen und/oder Reibbremseinrichtungen zugeordnet werden. Die Steuereinrichtung bestimmt insbesondere den Bremsdruck oder Bremsstrom und mindestens einen weiteren Parameter basierend auf bereitgestellten Sensordaten. Alternativ oder zusätzlich kann durch die Steuereinrichtung eine Längskraft oder Koppelkraft zwischen den Fahrzeuggliedern bestimmt werden. Basierend auf diesen Daten kann die Steuereinrichtung unabhängig von Bremskraft oder Bremsmomentsensoren eine Bremswirkung, insbesondere eine auf das Fahrzeug wirkende Gesamtbremskraft oder ein Gesamtbremsmoment bestimmen. Dadurch kann die Zahl der Bremskraftsensoren zumindest verringert werden.

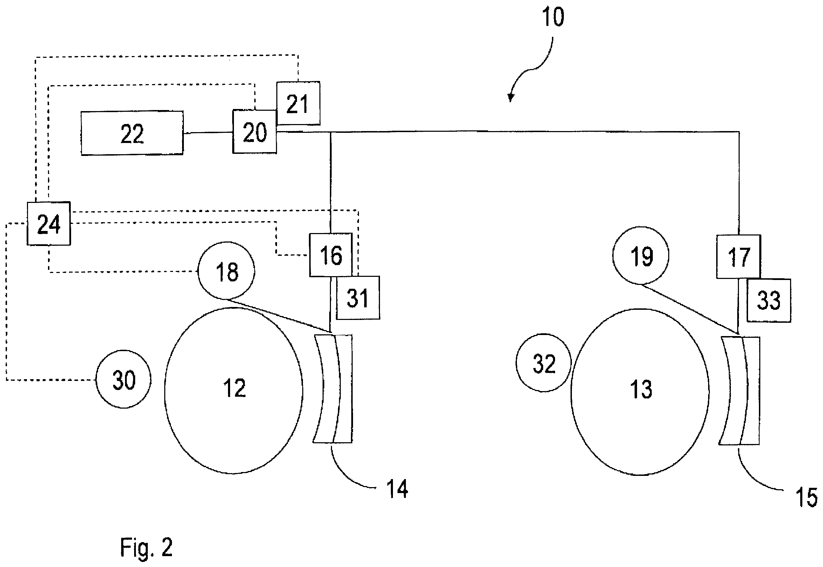

**Fig.2** zeigt ein Beispiel für eine Bremsanlage, wie sie beispielsweise beim Fahrzeug der Figur 1 eingesetzt werden kann. **Fig.2** zeigt schematisch eine Bremsanlage 10 eines Schienenfahrzeugs, die in diesem Fall eine pneumatische Klotzbremsvorrichtung als kraftschlussabhängige Reibungsbremsvorrichtung umfasst. Mechanische und pneumatische Verbindungen und Leitungen sind mit durchgezogenen Linien dargestellt, während elektrische Verbindungen oder Kommunikationskanäle gestrichelt dargestellt sind. Die Bremsanlage 10 ist dazu vorgesehen, Räder 12 und 13 des Schienenfahrzeugs zu bremsen. In diesem Beispiel befinden sich die Räder 12 und 13 auf unterschiedlichen Radachsen. Dem ersten Rad 12 ist ein erster Bremsklotz 14 zugeordnet. Dem zweiten Rad 13 ist ein zweiter Bremsklotz 15 zugeordnet. Jeder der Bremsklötze 14, 15 weist einen Bremsbelag auf, der dann, wenn der Bremsklotz mit dem Bremsbelag an die Lauffläche des zugeordneten Rades 12, 13 gedrückt wird, das zugeordnete Rad abbremst. Der Bremsklotz 14 ist durch einen Krafterzeuger 16 zum Bremsen betätigbar. Der Krafterzeuger 16 ist über eine Versorgungsleitung mit einer Hauptsteuerventileinrichtung 20 verbunden. Über die Hauptsteuerventileinrichtung 20 kann dem Krafterzeuger 16 Druckluft zugeführt werden. Ähnlich ist dem Bremsklotz 15 ein Krafterzeuger 17 zugeordnet, der ebenfalls über die Hauptsteuerventileinrichtung 20 mit Druckluft zur Betätigung des Krafterzeugers versorgt werden kann, um den Bremsklotz 15 mit der Radlauffläche des Rades 13 in Kontakt zu bringen. Die Hauptsteuerventileinrichtung 20 ist mit einer Druckluftvorratseinrichtung 22 verbunden, aus der sie Druckluft entnehmen kann, um sie bei einer Bremsung den Krafterzeugern 16, 17 bereitzustellen. Ferner ist eine als Bremsrechner ausgebildete elektronische Bremssteuereinrichtung 24 vorgesehen, welche es vermag, die Hauptsteuerventileinrichtung 20 anzusteuern. Dazu kann die Hauptsteuerventileinrichtung 20 insbesondere eine oder mehrere Magnetventile aufweisen, die durch die Bremssteuereinrichtung 24 ansteuerbar sind. Aus Gründen der Übersicht sind die elektrischen Steuerleitungen für die dem zweiten Rad zugeordneten Komponenten nicht dargestellt. Sie sind allerdings mit den dem ersten Rad und seinen Komponenten zugeordneten Steuerleitungen vergleichbar. Dem ersten Rad 12 ist ferner ein Bremswirkungssensor 18 zugeordnet, der es vermag, eine bei einer Bremsung auf den Bremsklotz 14 ausgeübte Bremskraft und/oder ein Bremsmoment zu ermitteln. Der Bremswirkungssensor 18 kann somit als Bremskraftsensor angesehen werden. Ein derartiger Bremswirkungssensor kann beispielsweise einen oder mehrere Dehnungsmessstreifen aufweisen. Der Sensor 18 ist zur Übertragung von Daten an die elektronische Bremssteuereinrichtung 24 angeschlossen. Ferner ist dem Rad 12 ein erster Raddrehzahlsensor 30 zugeordnet, welcher die Drehzahl des Rades 12 zu erfassen vermag. Auch dieser Sensor ist zur Datenübertragung mit der elektronischen Steuereinrichtung 24 verbunden. Analog ist dem zweiten Rad ein zweiter Bremswirkungssensor 19 zugeordnet, welcher eine auf den Bremsklotz 15 ausgeübte Bremskraft und/oder ein Bremsmoment zu ermitteln vermag. Darüber hinaus ist dem zweiten Rad 13 auch ein zweiter Raddrehzahlsensor 32 zugeordnet. Die Sensoren 18, 19 können jeweils als Teil einer Bremswirkungssensoreinrichtung angesehen werden. Die Raddrehzahlsensoren 30, 32 können jeweils als Teil einer Raddrehzahlsensoreinrichtung angesehen werden. Die Krafterzeuger 16, 17 können jeweils pneumatische Zylinder umfassen, die bei Beaufschlagung mit einem Bremsdruck eine Bremskraft auf den zugeordneten Bremsklotz 14, 15 ausüben. Die Krafterzeuger 16, 17 können ferner jeweils eine durch die elektronische Steuereinrichtung 24 ansteuerbare Steuerventileinrichtung aufweisen, über die ein durch die Hauptsteuerventileinrichtung 20 bereitgestellter Hauptbremsdruck individuell für den jeweiligen pneumatischen Zylinder der Krafterzeuger 16, 17 eingestellt werden kann. Somit können insbesondere die Krafterzeuger 16, 17 nach Maßgabe der elektronischen Steuereinrichtung 24 unterschiedliche Bremsdrücke an die Bremsklötze 14, 15 anlegen und somit die Reibbremseinrichtungen asymmetrisch oder separat betätigen oder ansteuern. Der Hauptsteuerventileinrichtung 20 ist ein Hauptbremsdrucksensor 21 zugeordnet, der den durch die Hauptsteuerventileinrichtung 20 bereitgestellten Hauptbremsdruck zu erfassen vermag. Der Drucksensor 21 ist zur Datenübertragung mit der elektronischen Steuereinrichtung 24 verbunden. Ferner ist dem Krafterzeuger 16 ein erster Bremsdrucksensor 31 zugeordnet, und dem zweiten Krafterzeuger 17 ein zweiter Bremsdrucksensor 33. Der erste und der zweite Bremsdrucksensor 31, 33 sind jeweils dazu ausgebildet, dem individuell zum Erzeugen einer Bremskraft durch den zugeordneten Krafterzeuger 16, 17 bereitgestellten Bremsdruck zu erfassen. Die Sensoren 31, 33 sowie der Hauptbremsdrucksensor 21 können als Teil einer Bremsdrucksensoreinrichtung angesehen werden. Die Bremsdrucksensoren 21, 31, 33 sind ebenfalls zur Datenübertragung mit der elektronischen Bremssteuereinrichtung 24 verbunden. Somit kann die elektronische Bremssteuereinrichtung 24 einerseits den eingeleiteten Hauptbremsdruck hinter der Hauptsteuerventileinrichtung 20 erfassen. Andererseits empfängt die Bremssteuereinrichtung 24 jeweils den individuell zur Erzeugung von Bremskraft bei den einzelnen Krafterzeugern 16, 17 wirksamen Bremsdruck. In der Figur 2 kann der Krafterzeuger 16 mit dem Bremsklotz 14 als erste Reibbremseinrichtung angesehen werden. Der Krafterzeuger 17 und der zweite Bremsklotz 15 können als zweite Reibbremseinrichtung angesehen werden. Es versteht sich, dass beide Reibbremseinrichtungen zugehörige Bremsgestänge und Aufhängungen aufweisen können, die nicht gezeigt sind. Die Hauptsteuerventileinrichtung 20 zusammen mit den Reibbremseinrichtungen kann als pneumatische Bremsvorrichtung angesehen werden. Statt als Klotzbremsen können die Reibbremseinrichtungen auch als Scheibenbremsen ausgebildet sein. Auch in diesem Fall kann jeweils ein Bremswirkungssensor vorgesehen sein, welcher eine bei der Bremsung ausgeübte Bremskraft und/oder ein Bremsmoment zu erfassen und entsprechende Bremsdaten an die elektronische Bremssteuereinrichtung 24 zu übertragen vermag. Die Bremssteuereinrichtung 24 ist dazu ausgebildet, von den Bremswirkungssensoren 18, 19 Bremswirkungsdaten und von den Bremsdrucksensoren 21, 31, 33 Bremsdruckdaten zu empfangen. Ferner ordnet die Bremssteuereinrichtung 24 die Bremsdruckdaten entsprechenden Bremswirkungsdaten zu und überwacht die einander zugeordneten Daten. Die Bremssteuereinrichtung 24 kann der im Zusammenhang mit **Fig.1** erwähnten Steuereinrichtung entsprechen. Es ist vorstellbar, dass jedem Rad eines Schienenfahrzeugs ein Bremswirkungssensor zugeordnet ist. Es ist allerdings auch vorstellbar, auf jedem Drehgestell oder jedem Wagen oder Fahrzeugglied nur einen Bremswirkungssensor vorzusehen, der einer Reibbremseinrichtung zugeordnet ist. Es kann sogar vorgesehen sein, dass keiner Reibbremseinrichtung ein Bremswirkungssensor zugeordnet ist. Insbesondere im Beispiel der **Fig.1** kann es zweckmäßig sein, nur auf dem mittleren Drehgestell 110 einen Bremswirkungssensor vorzusehen, welcher der in Fahrtrichtung vorne angeordneten Radachse oder der entsprechenden Reibbremseinrichtung zugeordnet sein kann. Basierend auf Daten eines solchen Bremswirkungssensors kann die Steuereinrichtung die aufgrund anderer Parameter bestimmte Bremswirkung kalibrieren.

### Bezugszeichenliste

- 10: Bremsanlage
- 12: erstes Rad
- 13: zweites Rad
- 14: erster Bremsklotz
- 15: zweiter Bremsklotz
- 16: erster Krafterzeuger
- 17: zweiter Krafterzeuger
- 18: erster Bremskraftsensor
- 19: zweiter Bremskraftsensor
- 20: Hauptsteuerventileinrichtung
- 21: Hauptbremsdrucksensor
- 22: Druckluftvorratseinrichtung
- 24: Bremssteuereinrichtung
- 30: erster Raddrehzahlsensor
- 31: erster Bremsdrucksensor
- 32: zweiter Raddrehzahlsensor
- 33: zweiter Bremsdrucksensor

- 100: Schienenfahrzeug
- 102: vorderes Fahrzeugglied
- 104: hinteres Fahrzeugglied
- 106: Kopplungsvorrichtung
- 108: Drehgestell
- 110: Drehgestell
- 112: Drehgestell
- 114: Rad
- 116: Schiene

## Patentansprüche

1. Bremsanlage (10) eines Schienenfahrzeugs (100), welche eine kraftschlussabhängige pneumatische Reibungsbremsvorrichtung umfasst, welche eine Kraft zur Bremsung über einen Rad-Schiene-Kontakt überträgt, wobei die pneumatische Reibungsbremsvorrichtung wenigstens Folgendes umfasst:
a) Wenigstens eine Reibbremseinrichtung mit wenigstens einem Krafterzeuger, welcher ausgebildet ist, einen ihm zugeführten pneumatischen Bremsdruck in eine Bremskraft und/oder in ein Bremsmoment zur Betätigung von Reibelementen (12, 14; 13, 15) der Reibbremseinrichtung umzusetzen,
b) eine Bremsdrucksensoreinrichtung, welche ausgebildet ist, dass sie den pneumatischen Bremsdruck durch wenigstens einen Bremsdrucksensor (21, 31, 33) erfasst,
c) eine Bremswirkungssensoreinrichtung, welche ausgebildet ist, dass sie die durch die Reibungsbremseinrichtung ausgeübte Bremskraft und/oder das durch die Reibungseinrichtung ausgeübte Bremsmoment durch wenigstens einen, in Bezug auf den wenigstens einen Bremsdrucksensor (21, 31, 33) separaten Bremswirkungssensor (18, 19) erfasst,
d) eine elektronische Steuereinrichtung (24), welche ausgebildet ist, um von dem wenigstens einen Bremswirkungssensor (18, 19) Bremswirkungsdaten und von dem wenigstens einen Bremsdrucksensor (21, 31, 33) Bremsdruckdaten zu empfangen und um die Bremsdruckdaten entsprechenden Bremswirkungsdaten zuzuordnen und die einander zugeordneten Bremsdruckdaten und Bremswirkungsdaten zu überwachen, **dadurch gekennzeichnet, dass**
e) die elektronische Steuereinrichtung (24) durch eine elektronische Bremssteuereinrichtung gebildet wird, welche eine Steuerventileinrichtung (20) ansteuert, welche mit einer Druckluftvorratseinrichtung (22) verbunden ist, aus der sie Druckluft entnimmt, um sie bei einer Bremsung dem wenigstens einen Krafterzeuger (16, 17) bereitzustellen, wobei die Steuerventileinrichtung (20) wenigstens ein durch die elektronische Bremssteuereinrichtung (24) ansteuerbares Magnetventil aufweist, wobei
f) die elektronische Bremssteuereinrichtung es vermag, Komponenten der Bremsanlage anzusteuern, wobei die Bremsanlage neben der kraftschlussabhängigen pneumatischen Reibungsbremsvorrichtung eine Magnetschienenbremsvorrichtung, eine lineare Wirbelbremsvorrichtung und/oder eine Retardervorrichtung umfasst.

2. Bremsanlage nach Anspruch 1, **dadurch gekennzeichnet, dass** die Bremswirkungssensoreinrichtung wenigstens einen Bremswirkungssensor (18, 19) umfasst, welcher an einem Aufhängungspunkt einer Reibungsbremseinrichtung an einem Drehgestell (108, 110, 112) des Schienenfahrzeugs (100) angeordnet ist.

3. Bremsanlage nach Anspruch 1 oder 2, **dadurch gekennzeichnet, dass** die Bremswirkungssensoreinrichtung als Bremswirkungssensor (18, 19) wenigstens einen Dehnungsmessstreifen aufweist.

4. Bremsanlage nach einem der vorhergehenden Ansprüche, **dadurch gekennzeichnet, dass** der wenigstens einen Bremswirkungssensor (18, 19) der Bremswirkungssensoreinrichtung an beweglichen und/oder starren Elementen der Reibungsbremseinrichtung und/oder an der Aufhängung der Reibungsbremseinrichtung angeordnet ist, um bei einer Betätigung der Reibbremseinrichtung eine Rückwirkung zu messen, die durch die Reibelemente der Reibungsbremseinrichtung erzeugt wird.

5. Bremsanlage nach Anspruch 4, **dadurch gekennzeichnet, dass** die elektronische Steuereinrichtung (24) ausgebildet ist, dass sie durch die Rückwirkung auf die Bremskraft und/oder das Bremsmoment schließt.

6. Bremsanlage nach einem der vorhergehenden Ansprüche, **dadurch gekennzeichnet, dass** wenigstens eine Reibremseinrichtung
a) eine Bremsscheibe aufweist, welche ausgebildet ist, bei betätigter Bremse in reibenden Kontakt mit einer oder mehreren mit einem Bremsbelag versehenen Bremsbacken gebracht zu werden, oder
b) einen oder mehrere Bremsklötze (14, 15) mit zugeordnetem Bremsbelag aufweist, die bei betätigter Bremse in reibenden Kontakt mit einer Reibfläche eines Rades (12, 13) gebracht werden.

7. Bremsanlage nach einem der vorhergehenden Ansprüche, **dadurch gekennzeichnet, dass** wenigstens eine Reibungsbremseinrichtung ausgebildet ist, dass sie ein einzeln aufgehängtes Rad (12, 13) und oder eine Radachse bremst, welche mindestens zwei starr miteinander verbundene Räder aufweist.

8. Bremsanlage nach einem der vorhergehenden Ansprüche, **dadurch gekennzeichnet, dass** der wenigstens eine Krafterzeuger (16, 17) einen pneumatischen Zylinder aufweist.

9. Bremsanlage nach Anspruch 8, **dadurch gekennzeichnet, dass** der auf den pneumatischen Zylinder ausgeübte Druck den Bremsdruck darstellt.

10. Bremsanlage nach einem der vorhergehenden Ansprüche, **dadurch gekennzeichnet, dass** jedem Rad, jedem Drehgestell oder jedem Wagen des Schienenfahrzeugs (100) lediglich ein Bremswirkungssensor zugeordnet ist.

11. Schienenfahrzeug (100) mit einer Bremsanlage (10) nach wenigstens einem der vorhergehenden Ansprüche.

## Claims

1. A brake system (10) of a rail vehicle (100) comprising a pneumatic friction brake device that is dependent on non-positive engagement and transfers a force for braking via a wheel-rail contact, the pneumatic friction brake device comprising at least the following:
a) at least one friction brake device having at least one force generator that is designed to convert a pneumatic brake pressure supplied to it into a braking force and/or a braking torque in order to actuate friction elements (12, 14; 13, 15) of the friction brake device,
b) a brake pressure sensor device that is designed so as to measure the pneumatic brake pressure by means of at least one brake pressure sensor (21, 31, 33),
c) a braking effect sensor device that is designed so as to measure the braking force exerted by the friction brake device and/or the braking torque exerted by the friction brake device by means of at least one braking effect sensor (18, 19) that is separate from the at least one brake pressure sensor (21, 31, 33),
d) an electronic control device (24) that is designed so as to receive braking effect data from the at least one braking effector sensor (18, 19) and braking pressure data from the at least one brake pressure sensor (21, 31, 33), to match the braking pressure data to the corresponding braking effect data and to monitor the matched braking pressure data and braking effect data, **characterised in that**
e) the electronic control device (24) takes the form of an electronic brake control device that actuates a control valve device (20) that is connected to a compressed-air storage device (22) from which it takes compressed air in order to make it available to the at least one force generator (16, 17) during braking, the control valve device (20) having at least one solenoid valve that can be actuated by the electronic brake control device (24),
f) the electronic brake control device being able to actuate components of the brake system, the brake system comprising a magnetic track brake device, a linear eddy-current brake and/or a retarder device in addition to the pneumatic friction brake device that is dependent on non-positive engagement.

2. A brake system according to claim 1, **characterised in that** the braking effect sensor device comprises at least one braking effect sensor (18, 19) that is arranged at a suspension point of a friction brake device on a bogie (108, 110, 112) of the rail vehicle (100).

3. A brake system according to claim 1 or 2, **characterised in that** the braking effect sensor device has at least one strain-gauge strip as the braking effect sensor (18, 19).

4. A brake system according to any one of the preceding claims, **characterised in that** the at least one braking effect sensor (18, 19) of the braking effect sensor device is arranged on movable and/or rigid elements of the friction brake device and/or on the suspension of the friction brake device in order to measure a response that is generated by the friction elements of the friction brake device during actuation of the friction brake device.

5. A brake system according to claim 4, **characterised in that** the electronic control device (24) is designed so as to close due to the response to the braking force and/or braking torque.

6. A brake system according to any one of the preceding claims, **characterised in that** at least one friction brake device
a) has a brake disc that is designed to be brought into friction contact during brake actuation with one or more brake shoes that are each provided with a brake pad, or
b) has one or more brake blocks (14, 15) with associated brake pads that are brought into friction contact with a friction surface of a wheel (12, 13) when the brake is actuated.

7. A brake system according to any one of the preceding claims, **characterised in that** at least one friction brake device is designed so as to brake a single suspended wheel (12, 13) and/or a wheel axle that has at least two wheels that are rigidly connected to one another.

8. A brake system according to any one of the preceding claims, **characterised in that** the at least one force generator (16, 17) has a pneumatic cylinder.

9. A brake system according to claim 8, **characterised in that** the pressure exerted on the pneumatic cylinder represents the brake pressure.

10. A brake system according to any one of the preceding claims, **characterised in that** one braking effect sensor only is allocated to each wheel, each bogie or each carriage of the rail vehicle (100).

11. A rail vehicle (100) having a brake system (10) according to at least one of the preceding claims.

## Revendications

1. Installation (10) de freinage d'un véhicule (100) ferroviaire, qui comprend un système pneumatique de frein de friction, qui dépend de l'entraînement par adhérence et qui transmet une force pour le freinage par l'intermédiaire d'un contact roue-rail, le système pneumatique de frein à friction comprenant au moins ce qui suit :
a) au moins un dispositif à frein à friction, ayant au moins un producteur de force, constitué pour transformer une pression pneumatique de frein, qui lui est envoyée, en une force de freinage et/ou en un couple de freinage pour l'actionnement d'éléments (12, 14; 13, 15) de friction du dispositif de frein à friction,
b) un dispositif de capteur de la pression de frein, constitué pour relever la pression pneumatique de frein par au moins un capteur (21, 31, 33) de la pression de frein,
c) un dispositif de capteur de l'effet de frein, constitué de manière à relever la force de frein appliquée par le dispositif de frein à friction et/ou le couple de frein appliqué par le dispositif à friction par au moins un capteur (18, 19) d'effet de frein distinct du au moins un capteur (21, 31, 33) de la pression de frein,
d) un dispositif (24) électronique de commande constitué pour recevoir du au moins un capteur (18, 19) de l'effet de frein des données d'effet de frein et du au moins un capteur (21, 31, 33) de la pression du frein des données de pression du frein et pour associer les données d'effet de frein correspondant aux données de la pression de frein et pour contrôler les données de la pression de frein et les données d'effet de frein associées les unes aux autres, **caractérisée en ce que**
e) le dispositif (24) électronique de commande est formé d'un dispositif électronique de commande de frein, qui commande un dispositif (20) de soupape de commande, qui est relié à un dispositif (22) de réserve d'air comprimé, dont il prélève de l'air comprimé, pour le mettre à disposition, lors d'un freinage, du au moins un producteur (16, 17) de force, le dispositif (20) de commande ayant au moins une électrovanne pouvant être commandée par le dispositif (24) électronique de commande de frein, dans laquelle
f) le dispositif électronique de commande de frein permet de commander des composants de l'installation de freinage, l'installation de freinage comprenant, outre le système pneumatique de frein à friction, qui dépend de l'adhérence, un système de frein magnétique de rail, un système linéaire de frein de Foucault et/ou un système retardeur.

2. Installation de freinage suivant la revendication 1, **caractérisée en ce que** le dispositif de capteur de l'effet de frein comprend au moins un capteur (18, 19) de l'effet de frein, qui est monté en un point de suspension d'un dispositif de frein à friction sur un bogie (108, 110, 112) du véhicule (100) ferroviaire.

3. Installation de freinage suivant la revendication 1 ou 2, **caractérisée en ce que** le dispositif de capteur de l'effet de frein a, comme capteur (18, 19) de l'effet de frein, au moins une jauge de contrainte.

4. Installation de freinage suivant l'une des revendications précédentes, **caractérisée en ce que** le au moins un capteur (18, 19) de l'effet de frein du dispositif de capteur de l'effet de frein est monté sur des éléments mobiles et/ou fixes du dispositif de frein à friction et/ou sur la suspension du dispositif de frein à friction pour, lorsque le dispositif de frein à friction est actionné, mesurer un effet de retour produit par les éléments de friction du dispositif de frein à friction.

5. Installation de freinage suivant la revendication 4, **caractérisée en ce que** le dispositif (24) électronique de commande est constitué de manière à fermer, par l'effet de retour sur la force de frein et/ou le couple de frein.

6. Installation de freinage suivant l'une des revendications précédentes, **caractérisée en ce qu'**au moins un dispositif de frein à friction :
a) a un disque de frein constitué pour, lorsque le frein est actionné, être mis en contact de friction avec une ou plusieurs mâchoires de frein pourvues d'une garniture de frein, ou
b) a un ou plusieurs sabots (14, 15) de frein à garniture de frein associée, qui, lorsque le frein est actionné, sont mis en contact de friction avec une surface de friction d'une roue (12, 13).

7. Installation de freinage suivant l'une des revendications précédentes, **caractérisée en ce qu'**au moins un dispositif de frein à friction est constitué de manière à freiner une roue (12, 13) suspendue individuellement et/ou un essieu, qui a au moins deux roues reliées fixement entre elles.

8. Installation de freinage suivant l'une des revendications précédentes, **caractérisée en ce que** le au moins un producteur (16, 17) de force a un vérin pneumatique.

9. Installation de freinage suivant la revendication 8, **caractérisée en ce que** la pression appliquée au vérin pneumatique représente la pression de frein.

10. Installation de freinage suivant l'une des revendications précédentes, **caractérisée en ce qu'**à chaque roue, à chaque bogie ou à chaque voiture du véhicule (100) ferroviaire est associé seulement un capteur de l'effet de frein.

11. Véhicule (100) ferroviaire ayant une installation (10) de freinage suivant au moins l'une des revendications précédentes.
